# EUROPEAN PATENT APPLICATION

(11) **EP 4 343 131 A1**
(43) Date of publication of application: **27.03.2024**
(21) Application number: 22197479.3
(22) Date of filing: 23.09.2022
(51) Int. Cl.: F02C 6/00, F02C 9/34, F02C 9/40, F02C 9/54

(54) **METHOD FOR OPERATING A COMBUSTION SYSTEM, COMBUSTION SYSTEM AND GAS TURBINE ENGINE COMPRISING THE COMBUSTION SYSTEM**

(71) Applicant: General Electric Technology GmbH, 5400 Baden (CH)
(72) Inventor: HOFFMANN, Jürgen Gerhard, 5400 Baden (CH); PFISTER, Jörg, 5400 Baden (CH); ZINN, Hanspeter, 5400 Baden (CH); LE CLEACH, Vincent, 5400 Baden (CH)
(74) Representative: Freigutpartners IP Law Firm

(57) **Abstract**

Disclosed is a method enabling operation of a combustion system with at least two serially arranged combustion zones on fuels generally yielding varying flame speeds. First, the operating parameters of the gas turbine engine are determined (110). Control parameters for control means configured to distribute a total fuel mass flow to the individual combustion zones are determined dependent upon the gas turbine engine operating parameters (120). Information about the fuel composition is determined, in particular the relative fraction of the at least one combustible species having a higher flame speed than a first combustible species is quantified (130). Dependent on said information about the fuel composition the control parameters for the control means 23 may be adjusted (140). The control parameters are forwarded to the control means as control signals (150).

## Description

### TECHNICAL FIELD

The present disclosure relates to the subject matter set forth in the claims.

### BACKGROUND OF THE DISCLOSURE

The combustion of hydrogen and synthetically produced gases containing hydrogen and/or hydrocarbon species having two or more carbon atoms in a fuel molecule, so-called C2+ hydrocarbons, is increasingly discussed in the context of the reduction of net carbon dioxide emissions in power generation. In certain aspects, the combined combustion of natural gas and hydrogen and/or combustibles containing C2+ species in varying fractions might be desirable. Such combined combustion yields as one advantage an increased flexibility of operation adapted to the availability of the respective fuel. Preferably, a combustion system, which might in embodiments be the combustion system of a gas turbine engine, shall be able to be operated on fuel compositions comprising natural gas and, in embodiments, one of hydrogen or C2+ species in varying fractions, or, in other embodiments, a mixture of hydrogen and C2+ species. It is understood that, in further embodiments, operation on 100% natural gas or either 100% of hydrogen, 100% of C2+ species, or 100% of a mixture of hydrogen and C2+ species shall be included in said operation range.

Natural gas generally is understood as a gaseous combustible found as a fossil fuel in the earth and comprising predominantly methane, along with smaller fractions of other hydrocarbons and of a variety of nonhydrocarbon gases, which might include nitrogen, carbon dioxide, carbon monoxide and others. Generally, the methane content is 85% or more by volume at 1013.25 hectopascal and 15°C. In other examples the methane content in the natural gas might be 90% by volume or more or 95% by volume or more. In still other examples, methane may make up for 85% by volume or more, 90% by volume or more, or 95% by volume or more of the total hydrocarbon content, wherein all these volume fractions are referenced at 1013.25 hectopascal and 15°C.

Hydrogen and/or C2+ species yield a higher flame speed and ignitability than that of natural gas. Thus.one issue with the combustion of hydrogen and/or C2+ species in a combustion zone designed for operation on natural gas is potential combustion flashback. Other way round, an issue with the combustion of natural gas in a combustion zone designed for operation on hydrogen and/or C2+ species may be flame blowout.

An issue when combusting fuel compositions comprising natural gas and, in embodiments, one of hydrogen or C2+ species in varying fractions, or, in other embodiments, a mixture of hydrogen and C2+ species in one and the same combustion system can thus be broadly considered as comprising the problem of combusting fuels having different flame speeds while avoiding flame blowout when combusting a fuel having a relatively high fraction or consisting of the combustible species having the lower flame speed and avoiding flashback when combusting a fuel having a relatively high fraction or consisting of the combustible species having a higher flame speed.

Flashback is an issue which is the more serious the higher the temperature of the combustion fluid is in which the fuel is combusted. Thus, flashback when combusting fuels comprising components with a relatively high flame temperature needs to be addressed for an instance in staged combustion systems in which a downstream combustion zone is supplied with a still oxygen-rich fluid comprising combustion products from an upstream combustion zone at elevated temperatures. Such combustion systems are known, for one typical instance, in gas turbine engines, wherein the fluid emanating from an upstream combustion stage may or may not be partially expanded before being supplied to a downstream combustion zone.

US 7,216,486 B2 discloses several proposals to address said problem when combusting natural gas which may be blended with varying fractions of C2+ species. One therein proposed method is to shift the fuel mass flow distribution to increase the relative fuel flow portion of the upstream combustion stage and decrease the relative fuel flow portion of the downstream combustion stage. It is assumed that due to the leaner mixture in the downstream combustion zone the flashback risk is mitigated. It is apparent, however, that if the total fuel mass flow is maintained constant, the temperature of the combustion fluid supplied to the downstream combustion zone is increased, which may in turn increase the flashback proneness. US 7,216,486 B2 thus also proposes, if the fraction of the C2+ species exceeds a certain threshold, to reduce the total fuel mass flow and thus deload the gas turbine engine, or to shut down the system entirely.

### LINEOUT OF THE SUBJECT MATTER OF THE PRESENT DISCLOSURE

It is an object of the present disclosure to provide the initially mentioned subject matter. More specifically, a method for operating a combustion system shall be provided. The method shall in aspects avoid the drawbacks in the art, and more specifically in the art cited above. The method shall in further aspects be suited to enable operation of the combustion system with fuels comprising varying fractions of combustible species having different flame speeds. In a more specific aspect the method shall be suited to enable operation of the combustion system on a fuel in which the combustible species comprise either 100% of combustible species having a relatively lower flame speed, 100% of combustible species having a relatively higher flame speed, or any mixture of combustible species having the relatively lower and the relatively higher flame speed. Said operation on fuels having a variable composition of combustible species shall be achieved without the need to reduce the thermal power of the combustion system, or the useful power output of a gas turbine engine with the combustion system being operated on the proposed method, based upon the change of the composition of com bustibles.

In another aspect, a combustion system configured for performing the herein proposed method shall be disclosed. In still another aspect, a gas turbine engine in which the herein proposed method may be applied shall be disclosed.

This is achieved by the subject matter described in claim 1 and in the further independent claims. Further effects and advantages of the disclosed subject matter, whether explicitly mentioned or not, will become apparent in view of the disclosure provided below.

Disclosed, thus, is a method for operating a combustion system. The method comprises providing a flow of combustion fluid to the combustion system, flowing the flow of combustion fluid through the combustion system in an upstream-to-downstream direction, discharging a flow of fuel into the combustion system and combusting the flow of fuel with at least a fraction of the flow of combustion fluid. To this extent, the method comprises generating a flow of combustion gases, and discharging the flow of combustion gases at a downstream end of the combustion system. Discharging the flow of fuel into the combustion system comprises apportioning a first fuel mass flow fraction of a total mass flow of fuel to a relatively upstream located first combustion zone of the combustion system and providing at least a second fuel mass flow fraction of the total fuel mass flow to at least one relatively downstream located second combustion zone which is located downstream from the first combustion zone. The flow of fuel comprises a fuel having a fuel composition including a first relative fraction of the fuel composition consisting of a first combustible species having a first flame speed when combusted in the combustion fluid and at least one second relative fraction of the fuel composition consisting of at least one second combustible species having a second flame speed when combusted in the combustion fluid, wherein the second flame speed is larger than the first flame speed. It is understood that the relative fraction of a species may in particular mean one of a mass fraction and a volume fraction of said species as a fraction of the total fuel composition. The method further comprises quantifying at least one of the first relative fraction of the fuel composition and the second relative fraction of the fuel composition. It is understood that the second relative fraction can be directly determined, but may in embodiments also indirectly be derived for instance from measured relative fractions of other species, like for instance the first relative fraction, that is the relative fraction of the first combustible species, of the fuel composition. It shall be understood in the following that a change in the second relative fraction of the fuel composition may likewise be expressed as a change of the first relative fraction of the fuel composition with inverse algebraic sign. The method further comprises, at least in a range between two values of at least one of the first relative fraction of the fuel composition and the at least one second relative fraction of the fuel composition, controlling the allocation of fuel to the first fuel mass flow fraction of the total fuel mass flow such that the first fuel mass flow fraction of the total fuel mass flow, that is, the fraction which is apportioned to the relatively upstream first combustion zone, is decreased with an increasing second relative fraction of the fuel composition and said first fuel mass flow fraction of the total fuel mass flow is increased with a decreasing second relative fraction of the fuel composition. The skilled person will appreciate that said allocation may also be controlled dependent on other operating parameters, like, for instance, while not limited to, the total fuel mass flow provided to a combustion system or the useful power output of a gas turbine engine in which the combustion system is integrated. The control of said allocation of fuel to the first fuel mass flow fraction, is controlled dependent on the fuel composition, e.g., at least one combustible species fraction, independent from and in addition to the control dependent on other operating parameters. The herein described control action may be performed if other operating parameters, like thermal power of a combustion system or useful power output of a gas turbine engine, are unchanged, or maintained constant, respectively.

"First" and "second" shall not be construed as limiting to exactly two of the respective feature being present. E.g., the first and second combustion zone need not be the most upstream and most downstream combustion zones in the combustion system, and it is not excluded that a further combustion zone is interposed between the named first and second combustion zones.

A combustion fluid may be any fluid in which, or in mixture with which, a fuel may be combusted. Typically, while not limiting, the combustion fluid may comprise or consist of air or another oxygen-containing gaseous fluid and/or air or another oxygen-containing gaseous fluid mixed with steam and/or combustion products from a relatively upstream combustion zone.

In shifting a fraction of the total fuel mass flow fuel from a relatively upstream combustion zone to a relatively downstream combustion zone the temperature of the fluid entering the relatively downstream combustion zone is reduced, thus reducing the flashback risk in the relatively downstream combustion zone. In particular if, as may commonly be the case, the temperature of the combustion fluid entering the relatively upstream combustion zone is significantly lower than that at the entry of the relatively downstream combustion zone, the overall flashback risk in the combustion system can be significantly reduced, if not avoided. For particular instances, the relatively upstream combustion zone may receive air from a fan or from a compressor, for instance the compressor of a gas turbine engine, while a relatively downstream combustion zone receives a mixture of combustion products from a combustion zone upstream thereof and residual air.

It is noted that within the framework of the present disclosure the use of the indefinite article "a" or "an" does in no way stipulate a singularity nor does it exclude the presence of a multitude of the named member or feature. It is thus to be read in the sense of "at least one" or "one or a multitude of".

The flame speed of a combustible species is defined as the speed at which the flame front travels relative to the unburned gas mixture. In a combustion system of the herein disclosed type, the velocity of the unburned mixture of combustion fluid and fuel is designed such that the flame front stays stationary and within a tolerable distance range relative to upstream combustor walls and/or internal fixtures. If the flame speed increases relative to the convection velocity of the unburned mixture of combustion fluid and fuel, the flame front may establish too close to said upstream combustor walls and/or internal fixtures and result in overheating of and damage to said components of the combustion system. The flame speed of the combustible species is determined by methods known to the skilled person. For the purpose of the comparison of the flame speed of species as herein used, it is understood that those flame speeds are flame speeds which are determined at equal reference conditions for both combustible species, that is, at the same temperature, pressure and equivalence ratio. Said reference conditions to which the flame speeds refer may be chosen in a range which is representative for the conditions within the combustion system. Below, specific examples are provided for the first and second combustible species, such that, for a non-limiting instance, methane is the first combustible species having the relatively lower flame speed and hydrogen or at least one C2+ hydrocarbon or C2+ alkane, or a mixture thereof, is the at least one combustible species having the relatively higher flame speed.

The method, in embodiments, comprises an on-line monitoring of the fuel composition at least comprising a quantification of the second fraction of the fuel composition and/or a ratio of the second relative fraction of the fuel composition to the first relative fraction of the fuel composition. One example of a method for on-line and real-time determination of a fuel composition, as may be applied in this context, is disclosed in DE 103 02 487 A1. This embodiment of the herein disclosed method provides an accurate and dynamic adjustment of the allocation of fuel to the relatively upstream and the at least one relatively downstream combustion zone. In other embodiments, two flows of fuel comprising different fractions of the first and at least one second combustible species may be mixed with each other through separate supply lines before being discharged into the combustion system, wherein each of said supply lines has a regulation valve for controlling the flow of the respective fuel. In such a case, the first and second relative fractions of the resulting fuel composition may be determined through the respective valve stroke, and may for instance be corrected by the temperature and pressure of the respective flow of fuel upstream the respective control valve.

Natural gas, as noted above, may comprise varying compositions. The fuel composition may thus in embodiments be characterized by the fraction of methane and the fraction of the second combustible species in the fuel. That is, the first combustible species, in embodiments, is methane. In other embodiments, the natural gas may be characterized prior to being mixed with the second combustible species, as, for a non-limiting instance, additional hydrogen and/or C2+ species, and a further characterization of the mixed fuel would then allow a quantification of the fraction of natural gas and the added second combustible species. "Characterization" of a fluid, in this context, may broadly be understood as a determination of the species contained in the fluid.

The at least one second combustible species may in more specific aspects consist of at least one of hydrogen and/or at least one C2+ hydrocarbon or a mixture thereof. That is, the characterization of the fuel composition would include the determination of the fraction of hydrogen and/or C2+ species, which can, as noted above, be determined by a direct measurement of be derived from the quantification of other species.

In further, more specific, however non-limiting, instances it may be provided that a flow of combustion fluid and combustion products emanating from the first combustion zone is at least partially expanded prior to entering a second combustion zone. Said expansion may for instance be performed in a high-pressure expansion turbine comprising at least one expansion turbine stage fluidly interposed between the first and second combustion zone. A gas turbine engine having a high pressure expansion turbine fluidly interposed between a first and a second combustion zone is for instance disclosed in EP 620 362 and EP 740 057. In the cited documents, the flow of combustion fluid and combustion products emanating from the first combustion zone is only partially expanded prior to entering the second combustion zone, and is, downstream of the second combustion zone, further expanded in a low-pressure expansion turbine. Said at least one interposed high-pressure expansion turbine may thus be referred to as a pre-expansion turbine. As indicated above, the flow of gases emanating from the second combustion zone is discharged into an expansion turbine, or at least one expansion turbine stage, respectively, arranged downstream the second combustion zone. Said expansion turbine may be a low-pressure expansion turbine as defined in, for instance, EP 620 362 and EP 740 057. Both, the high pressure expansion turbine and the low pressure expansion turbine which is provided downstream from the second combustion zone, may in embodiments provide power to a common shaft.

To the extent that the combustion system is provided in a gas turbine engine, the gas turbine engine may comprise at least one row of variable inlet guide vanes at an upstream end of the compressor. Said vanes are provided with a variable angle or pitch relative to the direction of flow, and, in embodiments, the axial direction of the compressor and serve to adjust, or selectively increase or decrease, the volume flow of fluid entering the compressor, and thus the volume flow of combustion fluid in terms of the present disclosure. The method may then comprise, at least in a second range between two values of at least one of the first relative fraction of the fuel composition and the at least one second relative fraction of the fuel composition, controlling the vane angle of at least one variable inlet guide vane row to increase the mass flow of combustion fluid with an increasing second relative fraction of the fuel composition and controlling the vane angle of the at least one variable inlet guide vane row to decrease the mass flow of combustion fluid with a decreasing second relative fraction of the fuel composition. Said second range between two values of at least one of the first relative fraction of the fuel composition and the at least one second relative fraction of the fuel composition may be inside, overlap with, or be entirely different from the above-mentioned range defined between two values of at least one of the first relative fraction of the fuel composition and the at least one second relative fraction of the fuel composition. In embodiments, said control of the at least one variable inlet guide vane row may become effective when the second relative fraction of the second combustible species having the relatively higher flame speed is above a threshold value. Said threshold value may be defined dependent on operating parameters of the combustion system, or a gas turbine engine in which the combustion system is operated, such as initial position of the at least one variable inlet guide row, total fuel mass flow, thermal load, relative load of a gas turbine engine, and so forth. Said parameters may be used alone or in combination with others. Increasing the flow of combustion fluid, while maintaining or only insignificantly changing the total fuel mass flow, reduces the equivalence ration in the combustion zones and the temperature of the combustion fluid received by the second combustion zone, while at the same time increasing the convective velocity inside the combustion zones, and thus reduces the flashback risk in both combustion zones.

Further disclosed is a combustion system configured for performing the above-described method. The combustion system comprises at least one combustion flow path for flowing a combustion fluid therethrough and a fuel supply system. The combustion flow path has an upstream end and a downstream end. The at least one combustion flow path further includes a relatively upstream located first combustion zone inside the at least one combustion flow path and at least one relatively downstream located second combustion zone inside the at least one combustion flow path. The at least one second combustion zone is located downstream from the first combustion zone and configured to receive a fluid flow emanating from a combustion zone located upstream thereof, as, for instance, from the first combustion zone. The first combustion zone is provided with a first fuel discharge means for discharging fuel from the fuel supply system into the combustion flow path and to the first combustion zone, and the at least one second combustion zone is provided with a second fuel discharge means for discharging fuel from the fuel supply system into the combustion flow path and to the second combustion zone. That is, for the sake of clarity, each second combustion zone may be provided with a respective second fuel discharge means. The fuel supply system is configured to provide fuel from a fuel supply source to the first combustion zone through the first fuel discharge means and to the at least one second combustion zone through the respective second fuel discharge means. The fuel supply source may be a common fuel supply source for both combustion zones. The fuel supply system comprises control means for apportioning a first fuel mass flow fraction of a total fuel mass flow to the first combustion zone. Said control means may in particular instances comprise at least one valve or a multitude of valves arranged to perform the named function. Such valve arrangements are essentially known to the skilled person. The system further comprises a control system adapted and configured to receive information about the fuel composition comprising quantitative information about the relative fraction of at least one combustible species. As noted above, this may be quantitative information about the relative fraction of the at least one second combustible species, but may also be or comprise information about the relative fraction of other species of the fuel from which the relative fraction of the at least one second combustible species may be derived. Said information about the fuel composition may be intermittently provided for instance as results from repeated off-line analysis of the fuel. In other embodiments, as will be set forth in more detail below, the information about the fuel composition may be provided from an on-line measurement system. In still other embodiments, the information might be derived from the valve strokes of valves for metering different fuel constituents to be mixed to form a blended fuel provided through the fuel supply system. As noted above, the relative fraction values derived from said valve stroke information may further be corrected by pressure and temperature readings from respective sensors, which may in particular be arranged inside fuel lines and upstream the valves for metering the different fuel constituents. The control device is further adapted and configured to control the control means for apportioning the first fuel mass flow fraction of the total fuel mass flow to the first combustion zone such that, at least in a range between two values of at least one of the first relative fraction of the fuel composition and the at least one second relative fraction of the fuel composition, the first fuel mass flow fraction of the total fuel mass flow apportioned to the first combustion zone is decreased with an increasing second relative fraction of the fuel composition and the first fuel mass flow fraction of the total fuel mass flow apportioned to the first combustion zone is increased with a decreasing second relative fraction of the fuel composition.

As suggested above, in embodiments of the combustion system a measurement device suited for on-line characterization of the composition of the fuel supplied to the at least one combustion flow path may be operatively coupled to the fuel supply system and configured to quantify a fraction of at least one species, in particular embodiments of at least one combustible species, in the fuel composition provided through the fuel supply system. The measurement device is operatively coupled to the control device so as to provide the quantitative information about the fraction of at least one combustible species in the fuel composition to the control device. In embodiments, the measurement device may be configured to directly quantify the at least one relative fraction relative fraction of the at least one second combustible species. In other embodiments said at least one relative fraction relative fraction of the at least one second combustible species may be deducted from the relative fraction of other species.

The combustion system as suggested may further be configured to have a high pressure expansion turbine having at least one expansion turbine stage fluidly interposed between the first combustion zone and the second combustion zone.

The first and second combustion zones may be arranged in a common combustion space, which may also referred to as a combustion chamber or a combustor. Such an arrangement is for instance known from the so-called late-lean combustion technique.

Still further disclosed is a gas turbine engine comprising a compressor, an expansion turbine and a combustion system of the kind suggested above, wherein the combustion system is arranged and configured to receive combustion fluid from the compressor and to discharge fluid from the combustion system into an expansion turbine. In embodiments thereof, at least one high pressure expansion turbine comprising at least one expansion turbine stage may be fluidly interposed between the first combustion zone and the second combustion zone, while at least one low pressure combustion turbine is provided downstream of the second combustion zone, as was generally suggested for instance in EP 620 362 and EP 740 057.

It is understood that the features and embodiments disclosed above may be combined with each other. It will further be appreciated that further embodiments are conceivable within the scope of the present disclosure and the claimed subject matter which are obvious and apparent to the skilled person by virtue of the present disclosure.

### BRIEF DESCRIPTION OF THE DRAWINGS

The subject matter of the present disclosure is now to be explained in more detail by means of selected exemplary embodiments shown in the accompanying drawings. The figures show
- Fig. 1: a first exemplary embodiment of a gas turbine engine equipped with a combustion system in accordance with and suited for performing a method according to the present teaching;
- Fig. 2: a block diagram outlining an embodiment of a method according to the present teaching;
- Fig. 3: a second exemplary embodiment of a gas turbine engine equipped with a combustion system in accordance with and suited for performing a method according to the present teaching;
- Fig. 4: a third exemplary embodiment of a gas turbine engine equipped with a combustion system in accordance with and suited for performing a method according to the present teaching;

It is understood that the drawings are highly schematic, and details not required for instruction purposes may have been omitted for the ease of understanding and depiction. It is further understood that the drawings show only selected, illustrative embodiments, and embodiments not shown may still be well within the scope of the herein disclosed and/or claimed subject matter.

### EXEMPLARY MODES OF CARRYING OUT THE TEACHING OF THE PRESENT DISCLOSURE

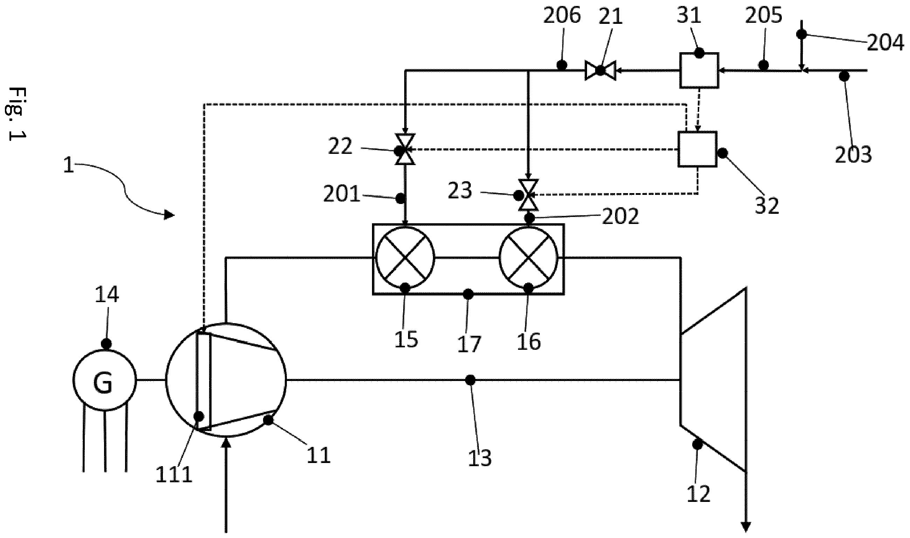

Figure 1 outlines a first exemplary embodiment of an arrangement for carrying out the teaching of the present disclosure. A gas turbine engine 1 comprises a compressor 11 and an expansion turbine 12 which are arranged on a common shaft 13. In a manner perfectly known to the skilled person, expansion turbine 12 is intended to drive compressor 11 and provide useful power, for instance to a generator 14 which is drivingly connected to shaft 13 for being driven by the gas turbine engine. Compressor 11 is equipped with at least one row of adjustable inlet guide vanes 111, also known as a variable inlet guide vane or VIGV. Gas turbine engine 1 further comprises a combustion system which in turn comprises two combustion zones 15 and 16. Combustion zones 15 and 16 may or may not be provided inside a common combustion chamber. A combustion chamber comprising two fluidly serial combustion zones is for instance known from the so-called late-lean combustion technique. Both combustion zones may independently from each other be supplied with fuel to be combusted as combustion fluid in the combustion zones. In a manner known per se, compressor 11 compresses ambient air and provides compressed ambient air to the combustion system as combustion fluid. A first fraction of a total mass flow of fuel may be discharged into the combustion system at relatively upstream located combustion zone 15 and be combusted therein. Consequently, a mixture of combustion products and residual air flows into relatively downstream second combustion zone 16, where a second fraction of the total mass flow of fuel is discharged into the combustion system. This second fraction of the total mass flow of fuel ignites in the hot mixture of combustion gases and residual air emanating from first relative upstream combustion zone 15 and is combusted. The flow of combustion products and residual air emanating from relatively downstream second combustion zone 16 is expanded in expansion turbine 12 and thereby produces mechanical power to drive compressor 11 and further provide useful power.

Combustion systems comprising multiple combustion zones arranged serially in the direction of the flow of combustion fluid are known from the art and serve, for instance, to reduce the formation of unwanted pollutants.

In the particular example, a first supply flow of fuel 203 having a first fuel composition and a second supply flow of fuel 204 having a second fuel composition are provided to the gas turbine engine fuel supply system and form a fuel blend or mixture 205. The fuel supplied as first supply flow of fuel 203 may for an instance consist of natural gas and the fuel supplied as second supply flow of fuel 204 may for an instance be or contain hydrogen and/or C2+ species and yield a higher flame speed than the fuel supplied as first supply flow of fuel 203. Generally speaking, the mixed fuel 205 may comprise at least two combustible species having different flame speed, and such composition may vary dependent on the relative mass flows of the fuel supplied as first supply flow of fuel 203 and the fuel supplied as second supply flow of fuel 204, and/or the composition of the therein supplied fuels. Hence, the flame speed of the mixed fuel 205 may vary. Fuel blend 205 may thus comprise a first combustible species having a first, relatively lower, flame speed. The first combustible species may generally be methane as the predominant constituent of the natural gas provided as the first supply flow of fuel 203. Fuel blend 205 may moreover comprise a second combustible species having a second, relatively higher, flame speed. Said second combustible species comprises at least one of hydrogen and/or a C2+ hydrocarbon, or alcane. The relative fractions of the first and second combustible species in the total combustible fraction of fuel blend 205 may in instances vary from 0% to 100%. Main regulating valve 21 is configured to control a total fuel mass flow 206 provided to the combustion system such that the useful power output, which may be expressed for instance by an electric power output from generator 14, meets a set value. Control valves 22 and 23 control the allocation of fuel to a first fuel mass flow fraction 201 to be combusted in first, relatively upstream combustion zone 15 and a second fuel mass flow fraction 202 to be combusted in second, relatively downstream combustion zone 16. In the present embodiment, one of control valves 22 and 23 or main regulating valve 21 could be omitted, wherein in the latter cases control valves 22 and 23 would need to be configured such as to jointly control the total fuel mass flow provided to the combustion system such that the useful power output meets the set value. In a manner known to a skilled person the allocation of fuel to the combustion zones is controlled dependent on certain operating parameters of gas turbine engine 1. However, as the relative fractions of the combustible species in the fuel blend varies, the flame speed of the fuel combusted in the combustion zones varies. In addition, the combustion temperature may vary. An increased flame speed of the fuel blend, in combination with, potentially, an increased temperature of the fluid emanating first, relatively upstream, combustion zone 15 and flowing as a combustion fluid to second, relatively downstream, combustion zone 16 may significantly increase the proneness to flashback in second combustion zone 16. It was discovered that, in reducing the first relative fuel mass flow fraction 201 provided to relatively upstream combustion zone 15 in relation to the total fuel mass flow 206, even with otherwise unchanged operating parameters of the gas turbine engine, said flashback risk associated with an increased flame speed of the fuel can be mitigated. It goes without saying that in the present embodiment with two combustion zones an increase of the second fuel mass flow fraction 202 in relation to the total fuel mass flow 206 comes along with a decrease of the first relative fuel mass flow fraction 201 in relation to the total fuel mass flow 206.

The above described method requires some quantitative information about the composition of the combustibles in the fuel blend 205. Thus, in the shown embodiment, a measurement device 31 suited for on-line characterization of the composition of the fuel is provided in a fuel supply line through which fuel blend 205 flows. Said measurement device is configured to quantify a relative fraction of at least one combustible species in the fuel blend 205. Useful information about the fuel composition allowing at least qualitative conclusions about the flame speed are provided to control device 32. Control device 32 may in particular be part of the control system of the gas turbine engine or a power station. Said information may for one instance comprise the relative fraction of the second combustible species in relation, for instance, to the total fuel composition or the content of the first combustible species. Control device 32 then provides control signals to control valves 22 and 23 so as to change to allocation of fuel to the different combustion zones. Control device 32 may in addition provide a control signal to variable inlet guide vane 111 so as to control variable inlet guide vane 111 dependent on the relative fractions of the different combustible species, as was outlined above.

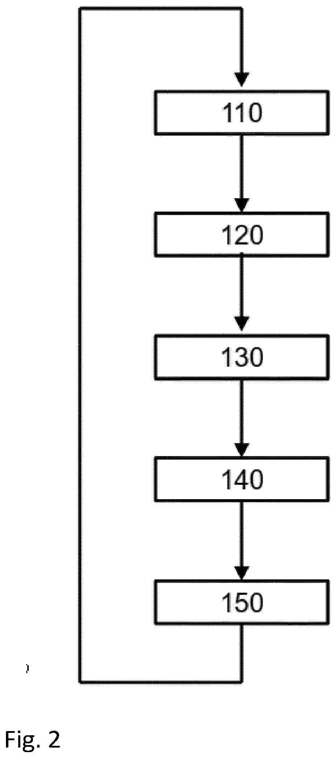

The described method is outlined in the block diagram of figure 2. In block 110, the operating parameters of the gas turbine engine are determined. In block 120, control parameters for control valves 22 and 23 are determined dependent upon the gas turbine engine operating parameters. In block 130, information about the fuel composition is determined, for instance the relative fraction of the at least one combustible species having a higher flame speed than a first combustible species may be quantified. Said relative fraction of the at least one combustible species having a higher flame speed may for instance be quantified as a fraction of the total fuel composition, as a fraction of the total combustible content, or in relation to a relative fraction of the first combustible species. As noted above, the first combustible species may be methane. The at least one combustible species having a higher flame speed compared to the first combustible species may consist of or comprise hydrogen and/or C2+ species. Dependent on said information about the fuel composition, the control parameters for control valves 22 and 23 may be adjusted in block 140. In block 150, said control parameters are forwarded to control valves 22 and 23 as control signals.

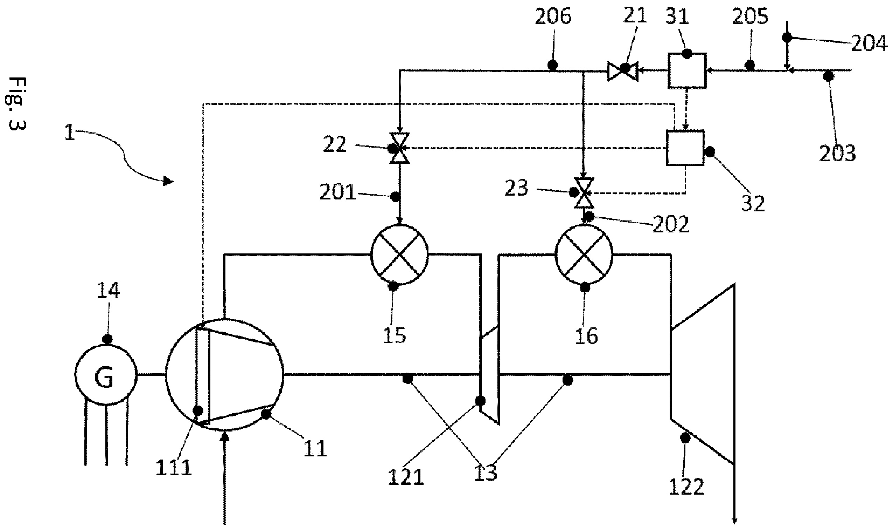

The embodiment shown in Figure 3 is different from that shown in figure 1 in that a high pressure expansion turbine 121 is fluidly interposed between upstream combustion zone 15 and downstream combustion zone 16, and further a low pressure expansion turbine 122 is provided downstream of downstream combustion zone 16, as suggested for instance in EP 620 362 and EP 740 057. It is understood that each of high pressure expansion turbine 121 and low pressure expansion turbine 122 comprise at least one expansion turbine stage. In any other respect, the fuel supply system and control system for allocating the fuel to the upstream and downstream combustion zones is identical with that outlined in connection with figure 1.

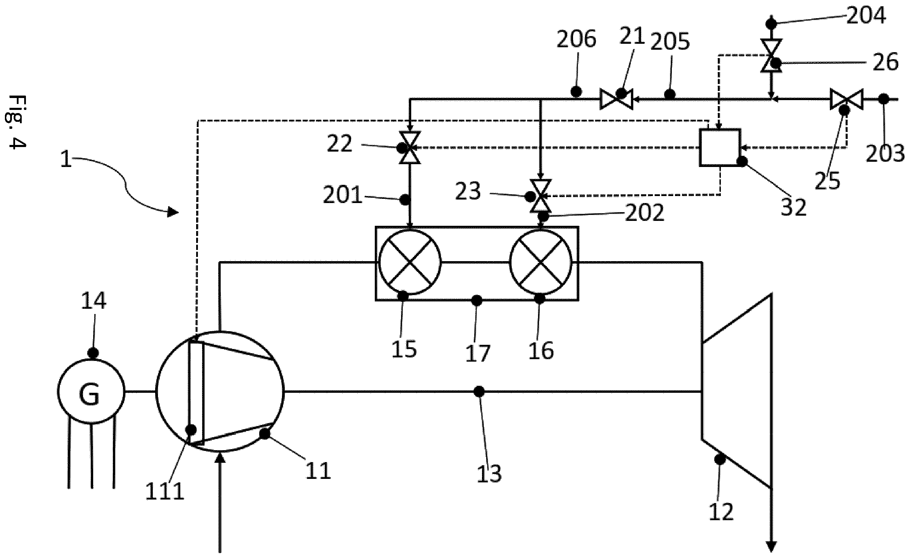

Figure 4 outlines an embodiment in which the gas turbine engine shown in figure 1 is equipped with a slightly modified fuel supply and control system. Measurement device 31 as shown in figures 1 and 3 is omitted. The supply lines for providing the first supply flow of fuel and the second supply flow of fuel are equipped with control valves 25 and 26, respectively. As in the embodiment of figure 1, first and second combustion zones 15 and 16 may or may not be arrange in a common combustion space or combustion chamber, combustor, 17. The opening or stroke of control valves 25 and 26 are used as a control input for control device 32. Said openings or strokes are considered as representative for the relative fractions of the first and second fuels in blend fuel 205. Assumptions need to be made about the composition of the first and second fuels supplied as first and second supply flows of fuel. For instance, regular off-line fuel analyses can be performed to determine the composition of the first and second fuels supplied as first and second supply flows of fuel. The valve strokes may thus provide quantitative information about the relative fraction of the at least one combustible species. Said valve openings or strokes may be supplemented by temperature and pressure measurements upstream valves 25 and 26 so as to even more accurately determine the mass flows through valves 25 and 26. Control device 32 may then generate control parameters for control valves 22 and 23, and thus for allocating shares of the total fuel mass flow 206, according to said valve openings or strokes of valves 25 and 26, information about the fuel compositions, and in particular combustible species composition, in supply fuel flows 203 and 204, and, optionally, the pressure and temperature values upstream valves 25 and 26. It is understood that the fuel supply and control system shown in figure 4 may also be applied in connection with a gas turbine engine in which at least one expansion turbine stage is fluidly interposed between relatively upstream and relatively downstream combustion zones, such as the gas turbine engine shown in figure 3.

The skilled person is readily able to apply the teaching of the present disclosure to multi-shaft gas turbine arrangement, such as that used in, while not limited to, ground and marine vehicles and aircraft propulsion.

While the subject matter of the disclosure has been explained by means of exemplary embodiments, it is understood that these are in no way intended to limit the scope of the claimed invention. It will be appreciated that the claims cover embodiments not explicitly shown or disclosed herein, and embodiments deviating from those disclosed in the exemplary modes of carrying out the teaching of the present disclosure will still be covered by the claims.

## Claims

1. A method for operating a combustion system, the method comprising providing a flow of combustion fluid to the combustion system, flowing the flow of combustion fluid through the combustion system in an upstream-to-downstream direction and discharging a flow of fuel (205) into the combustion system and combusting the flow of fuel with at least a fraction of the flow of combustion fluid,
wherein discharging the flow of fuel into the combustion system comprises apportioning a first fuel mass flow fraction (201) of a total mass flow of fuel (206) to a relatively upstream located first combustion zone (15) of the combustion system and providing at least a second fuel mass flow fraction (202) of the total fuel mass flow to at least one relatively downstream located second combustion zone (16) which is located downstream from the first combustion zone,
wherein the flow of fuel (205) comprises a fuel having a fuel composition including a first relative fraction of the fuel composition consisting of a first combustible species (203) having a first flame speed when combusted in the combustion fluid and at least one second relative fraction of the fuel composition consisting of at least one second combustible species (204) having a second flame speed when combusted in the combustion fluid, wherein the second flame speed is larger than the first flame speed,
the method further comprising quantifying (130) at least one of the first relative fraction (203) of the fuel composition and the second relative fraction (204) of the fuel composition (205),
the method still further comprising, at least in a range between two values of at least one of the first relative fraction of the fuel composition and the at least one second relative fraction of the fuel composition, controlling (140, 150) the allocation of fuel to the first fuel mass flow fraction (201) of the total fuel mass flow such that the first fuel mass flow fraction of the total fuel mass flow is decreased with an increasing second relative fraction of the fuel composition and the first fuel mass flow fraction (201) of the total fuel mass flow is increased with a decreasing second relative fraction of the fuel composition.

2. The method according to any preceding claim, wherein the method comprises an on-line monitoring of the fuel composition at least comprising a quantification of second fraction of the fuel composition and/or a ratio of the second relative fraction of the fuel composition to the first relative fraction of the fuel composition.

3. The method according to any preceding claim, wherein the first combustible species (203) is methane.

4. The method according to any preceding claim, wherein the at least one second combustible species (204) consists of at least one of hydrogen and/or at least one C2+ hydrocarbon or a mixture thereof.

5. The method according to any preceding claim, wherein a flow of combustion fluid and combustion products emanating from the first combustion zone is at least partially expanded prior to entering a second combustion zone.

6. The method according to the preceding claim, wherein the expansion is effected, at least in part, in a high-pressure expansion turbine comprising at least one expansion turbine stage (121).

7. The method according to any preceding claim, wherein a flow of gases emanating from the second combustion zone is discharged into an expansion turbine (12, 122).

8. The method according to claims 6 in combination with claim 7, wherein the high pressure expansion turbine (121) and a low pressure expansion turbine (122) which is provided downstream from the second combustion zone (16) provide power to a common shaft (13).

9. The method according to any preceding claim, comprising, at least in a second range between two values of at least one of the first relative fraction of the fuel composition and the at least one second relative fraction of the fuel composition, controlling the vane angle of at least one variable inlet guide vane row (111) to increase the mass flow of combustion fluid with an increasing second relative fraction of the fuel composition and controlling the vane angle of the at least one variable inlet guide vane row (111) to decrease the mass flow of combustion fluid with a decreasing second relative fraction of the fuel composition.

10. A combustion system configured for performing a method according to any preceding claim, the system comprising
at least one combustion flow path for flowing a combustion fluid therethrough and a fuel supply system,
the combustion flow path having an upstream end and a downstream end, a relatively upstream located first combustion zone (15) inside the at least one combustion flow path and at least one relatively downstream located second combustion zone (16) inside the at least one combustion flow path, wherein the at least one second combustion zone is located downstream from the first combustion zone and configured to receive a fluid flow emanating from a combustion zone upstream thereof, the first combustion zone (15) being provided with a first fuel discharge means for discharging fuel from the fuel supply system into the combustion flow path and to the first combustion zone and the at least one second combustion zone (16) being provided with a second fuel discharge means for discharging fuel from the fuel supply system into the combustion flow path and to the at least one second combustion zone,
wherein the fuel supply system is configured to provide fuel from a fuel supply source (205) to the first combustion zone (15) through the first fuel discharge means and to the at least one second combustion zone (16) through the respective second fuel discharge means, wherein the fuel supply system comprises control means (22) for apportioning a first fuel mass flow fraction (201) of a total fuel mass flow (206) to the first combustion zone (15),
the system further comprising a control system (32) adapted and configured to receive information about the fuel composition comprising quantitative information about the relative fraction of at least one combustible species and further being adapted and configured to control the control means (22) for apportioning the first fuel mass flow fraction of the total fuel mass flow to the first combustion zone (15) such that, at least in a range between two values of at least one of the first relative fraction of the fuel composition and the at least one second relative fraction of the fuel composition, the first fuel mass flow fraction of the total fuel mass flow apportioned to the first combustion zone is decreased with an increasing second relative fraction of the fuel composition and the first fuel mass flow fraction of the total fuel mass flow apportioned to the first combustion zone is increased with a decreasing second relative fraction of the fuel composition.

11. A combustion system according to the preceding claim, wherein a measurement device (31) suited for on-line characterization of the composition of the fuel supplied to the at least one combustion flow path is operatively coupled to the fuel supply system and configured to quantify a fraction of at least one species in the fuel composition provided through the fuel supply system, wherein the measurement device is further operatively coupled to the control device so as to provide the quantitative information about the fraction of at least one combustible species in the fuel composition to the control device (32).

12. A combustion system according to the preceding claim, wherein the combustion system is configured to have a high pressure expansion turbine comprising at least one expansion turbine stage (121) fluidly interposed between the first combustion zone (15) and the second combustion zone (16).

13. The combustion system according to any of claims 10 and 11, wherein the first combustion zone and the second combustion zone are arranged in a common combustion space (17).

14. A gas turbine engine comprising a compressor (11), an expansion turbine (12, 121, 122) and a combustion system according to any of claims 9 to 11, wherein the combustion system is arranged and configured to receive combustion fluid from the compressor and to discharge fluid from the combustion system into the expansion turbine.

15. The gas turbine engine according to the preceding claim, wherein at least one high pressure expansion turbine comprising at least one expansion turbine stage (121) is fluidly interposed between the first combustion zone (15) and the second combustion zone (16) and at least one low pressure combustion turbine (122) is provided downstream of the second combustion zone.
